# EUROPEAN PATENT APPLICATION

(11) **EP 2 159 991 A1**
(43) Date of publication of application: **03.03.2010**
(21) Application number: 08252819.1
(22) Date of filing: 26.08.2008
(51) Int. Cl.: H04L 29/08

(54) **Accessing a content distribution network**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

A partitioned network has several subdomains 1, 2, 3, each having a respective access server 10, 20, 30 and each serving a plurality of end users 11, 12; 21, 22; 31, 32. Each access server 10, 20, 30 is connected to a respective content cache 13, 23 or a set of such caches 130, 131, 132, which stores content and downloads it to end users on request. An alternative routing 19, 29 may be available between an access server 10 and a content cache 23 other than its associated cache 13, for use in exceptional circumstances.

All the content caches 13, 23, are given the same IP address, "W.X.Y.Z". Each access server 10, 20, 30 operates exclusively in a geographic sub-domain, and recognises the IP address W.X.Y.Z as relating uniquely to its respective associated content cache 13, (23, 23) This means that the configuration of each access server 10, 20, 30 to handle content caching/distribution/streaming can be the same regardless of its location in the network.

Any end user 10 can therefore obtain content from the cache 13 which is topologically closest, using the common IP address W.X.Y.Z . No address translation or mapping is required to route requests to the correct local content server.

If the access server 10 is unable to connect to the associated content server 13, it is configured to forward traffic to another content cache 23, by tunnelling the request to an access server 20 associated with that second cache. The second access server 20 recognises the address W.X.Y.Z as being that of its own associated content server 23, rather than the content server 13 associated with the first access server 10, and forwards the request accordingly. The content can then be returned to the address of the requesting user.

## Description

This invention relates to the operation of content distribution networks.

The distribution of video and other streamed content to users on demand using the internet as a distribution medium has become a major industry. Efficient distribution systems are becoming necessary in order to manage the sheer volume of data to be carried over the network.

One measure that content providers can take is to make the content available from a number of separate content caches instead of a single central server. The individual caches are periodically updated from a master database or server, and may or may not store the same data, (e.g. there is the capability to tailor the content to local conditions, for example different linguistic preferences of the populations of the areas served by each cache). An individual user requiring a data download is directed to one of the caches from which the data can be downloaded.

However, such a system is only efficient if each user request can be directed to the appropriate (e.g. closest) cache. In existing systems this would require a translation to be made between the network address of the end user (in the initial request message) and the address of the local cache.

In a typical system, the user would request the URL (universal resource location) code of the content provider, e.g. www.contentprovider.co.qq (where qq is a country code). This URL is processed by the domain name system (DNS) server co-operating with the user's browser system to identify a network-compatible internet address, typically a 32 or 128 bit number (e.g. IP address) which identify the network location of the target computer. The domain name system is a set of hierarchical servers. Each DNS server stores a subset of all the correspondences between URLs and IP addresses. If a DNS server does not have a record for a particular URL, the required information is sought from the authoritative DNS server for the domain associated with that URL, which either returns the required IP address or itself refers the request to another DNS server in its hierarchy, and so on. In most arrangements, the required correspondence, once retrieved from a higher level server, is then recorded in all the lower level DNS servers requesting it, thereby allowing more efficient retrieval on subsequent requests.

The URLs for download streaming services and other sites that may be cached are widely advertised and therefore have to be valid for a wide area, generally worldwide. The structure of the internet, and the way in which DNS servers operate, generally require a common IP address to be generated in response to a given URL. If a number of separate content caches are to be provided and accessed efficiently, a way needs to be found to allow the user to be given access to the appropriate one. This could be done by allowing the content provider to redirect users to the appropriate cache, but this would require the content provider to be able to identify where in the network topology the user is located. This is not readily apparent from the user identity (IP address) - the situation may also change dynamically depending on mobility of the user or changes in the configuration of the network. In any case, efficient routing of traffic takes place in the network, and primarily benefits the network operator. It is not necessarily within the content provider's area of expertise. For these reasons a network-based solution would be desirable.

One existing method of directing internet traffic is to implement a routing protocol such as the border gateway protocol (BGP) to maintain a routing policy which maintains a table of IP network addresses, whereby data is routed to the "nearest" or "best" of these destinations as viewed by the routing topology. A system known as "anycast" (by analogy with unicast, broadcast, and multicast) is also sometimes used to enable geographically distributed nodes to share a single IP address. Like broadcast (one-to-all) and multicast (one-to-many), in "anycast" each destination address identifies a set of some or (in broadcast) all receivers in the network as endpoints, but unlike either of these other systems only one of the set of endpoints (the "nearest" or "best") is selected to receive a transmission at any one time. This arrangement requires the routing protocol to maintain the routing list to determine which of the set of receivers is currently the "nearest" or "best" for each user or access point. Changes in network topology, mobility of network users, or other factors require such frequent changes to such a routing list.

The architecture of a modern telecommunications network consists of a number of relatively self-contained subdomains, usually serving different geographical areas although these need not be defined rigidly. The subdomains are interconnected both to allow communication between them and to provide robustness, so that in the event of technical difficulties in the equipment serving one subdomain, it can access processing power from and/or obtain connectivity through a neighbouring one. The present invention makes use of this architecture to provide improved access to a content distribution system. Each subdomain can be associated with a specified content cache. Note that this need not be a one-to-one correspondence, as one cache may serve more than one subdomain and one subdomain may be served by more than one cache. Because of the architecture of the network, the cache associated with the same subdomain as the requesting user will be the topologically closest, and therefore the most efficient for it to access.

According to a first aspect, the invention provides a content distribution network comprising a plurality of content servers, each content server being accessible using the same internet protocol (IP) address and arranged to receive requests for content from access servers arranged to route traffic to and from end users on a network, configured such that each access server directs data packets addressed to the IP address common to the content servers to the content server having the nearest IP routeable point to the source of the request for content, and the content servers are configured to provide said requested content to the source requesting said content.

According to a second aspect, the invention provides a method of operating a content distribution network comprising a plurality of content servers each being accessible using the same internet protocol address and a plurality of access servers arranged to route traffic to and from end users on a network, wherein each access server, on receiving a data packet addressed to the IP address common to the content servers, identifies the content server having the nearest IP routeable point to the source of the request for content, and routes the data packet to the content server so identified for fulfilment of the request by the content server.

It would be possible to arrange for the access server to have direct access to two or more content servers, whose position in the network it can identify so that it can determine which of them should deliver content to the user. However, in a preferred embodiment, the network is divided into a plurality of network subdomains each of which is associated with a corresponding access server and content server. Because the network is divided into subdomains, the access server associated with each subdomain will recognise the common internet protocol address as applying to its own content server and will not need to conduct a wider search. Thus each subdomain will identify the common IP address as applying only to its associated content server, and not to any of the others in other subdomains using the same IP address. Note that there may be a one-to-many association between the content servers and the subdomains - one content server may serve two or more subdomains.

To provide robustness to the system the system is preferably configured such that in the event of a content delivery criterion failure condition being detected, all traffic passing through one access server can be redirected to another content server by way of another access server in said content distribution system. This is preferably effected by the provision of routing apparatus arranged to implement said redirection when said failure condition is detected.

Preferably this is achieved by rerouting (e.g. by means of a "tunnel") the request from the initial access server to a second access server elsewhere, the second access server being associated with a different content server. As the content servers both have the same IP address, the second access server will recognise the IP address as relating to its own associated content server and direct the request thereto. However, as the requesting user has a unique IP address, the content server will nevertheless route the downloaded material correctly to the requesting user.

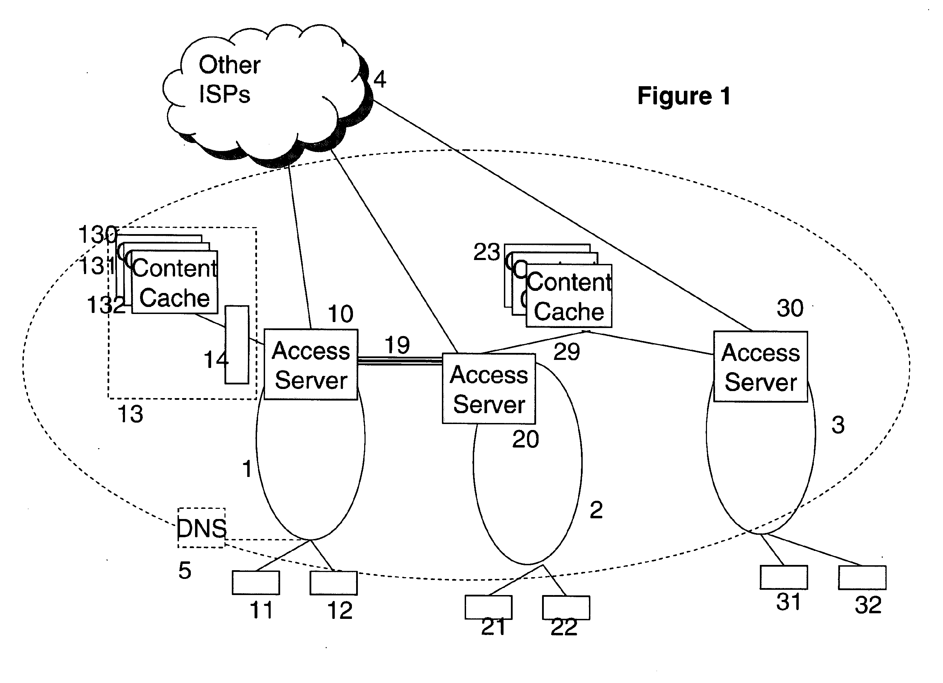

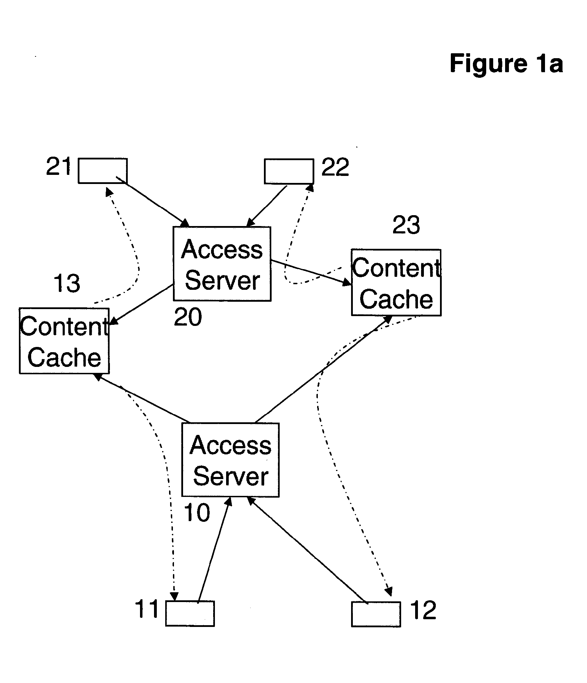

An embodiment of the invention will now be described by way of example and with reference to the Figures, in which
Figure 1 is a schematic and simplified representation of a network incorporating the invention
Figure 1 a shows an alternative embodiment
Figure 2 is a flow diagram illustrating the operation of the system in normal use
Figure 3 is a flow diagram illustrating the operation of the system in the event of failure of one of the content caches.

Figure 1a shows a first, sub-optimal embodiment. In this embodiment each access server 10, 20 has access to two or more content caches (content servers) 13, 23. The caches 13, 23 all have the same IP address. A request from a content consumer 11, 12, 21, 22 will be routed to one of the access servers 10, 20. The access server 10 identifies from its routing table (routing list), which of the caches 13, 23 is geographically or topologically in the best position to deliver the requested content to the requesting user 11, 12, and routes content requests from 11, 12 accordingly. As seen by the requesting user there is just one IP address and one cache, which is distributed as various subcaches in different parts of the network. The access server 10, 20 determines which sub-cache 13, 23 is to be used for each request (as described above), and returns the data by an appropriate routing (shown chain-dotted).

This arrangement is not the preferred embodiment, because it requires each access server to be specially adapted to the network topography so that it can identify, for each requesting device 11, 12, 21, 22, which is the appropriate cache to use. A preferred embodiment is shown in Figure 1.

Figure 1 depicts a simplified partitioned network having several subdomains 1, 2, 3, each having a respective access server 10, 20, 30 and each serving a plurality of end users 11, 12; 21, 22; 31, 32. Each end user connects to the access server which is associated with the geographic network sub-domain in which it is located. The network sub-domain may be a layer-1, layer-2 or layer-3 network.

Each access server 10, 20, 30 is connected to a respective content cache 13, 23 or a set of such caches, which stores content and downloads it to end users on request. A content cache 13 may be co-located with an access server 10, or it may be located elsewhere in the network. A content cache 13 may be dedicated to a single access server 10, or alternatively one content cache 23 may be shared between two or more access servers 20, 30. As will be explained later, an alternative routing 19, 29 may be available between an access server 10 and a content cache 23 other than its associated cache 13, for use in exceptional circumstances.

As shown for content cache 13, each such content cache may in practice consist of multiple devices 130, 131, 132 etc all connected to the access server(s) through a load-balancing device 14 which apportions the demand appropriately between the devices 130, 131, 132.

The access servers 10, 20, 30 are also connected to other networks 4 such as Internet Service Providers, or the Internet itself, or corporate intranets). These external networks 4 may have direct connectivity to each network sub-domain 1, 2, 3, as shown, or they may have aggregated connectivity to the network sub-domains through one or more common interface mediums.

All the content caches 13, 23, are given the same IP address, referred to herein as "W.X.Y.Z". As shown in Figure 1, the cache 13 comprises several subcaches 130, 131, 132 fronted by a load balancer 14. In such a case it is the load balancer 14 that has the common IP address. This means that the configuration of the access servers 10, 20, 30 to handle content caching/distribution/streaming can be the same regardless of its location in the network.

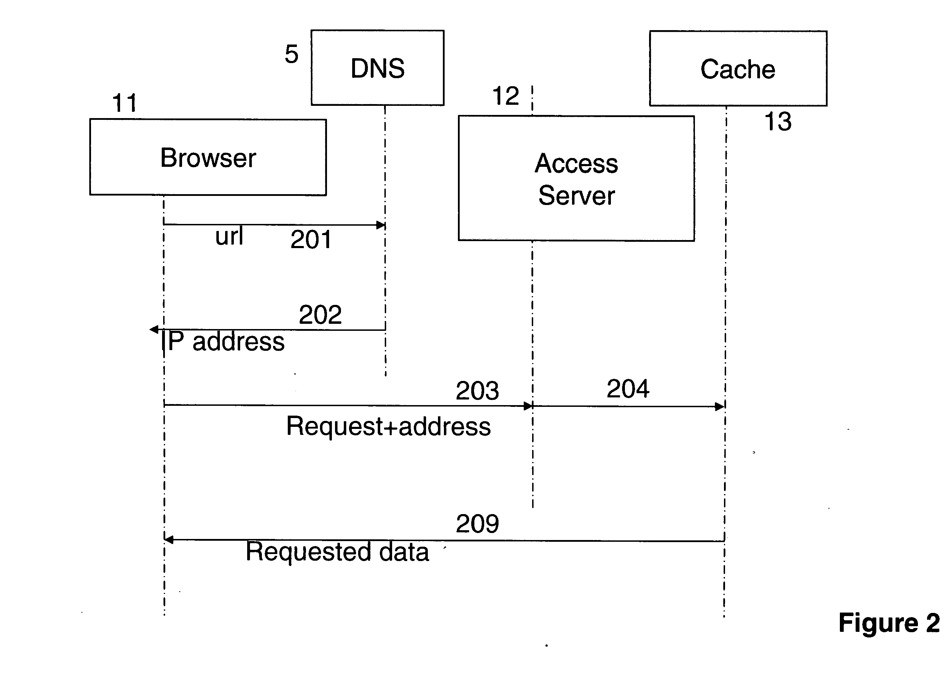

The operation of the system in normal use is depicted in Figure 2. A user requiring the streaming services is told the URL (universal resource location) of a piece of content, for example through a link in a web page, an embedded URL object in a web page, or some other means) and enters the URL code e.g. "www.contentsupplier.co.qq/content" into the browser facility of his terminal 11. The user's browser 11 requests (step 201), from its local DNS server 5, the IP address associated with the DNS name of that URL (i.e. the section of the URL code before the "/"). Instead of a browser, access may be by way of a dedicated client, or some other means.

The DNS system 5 returns the IP address "W.X.Y.Z" associated with that URL (step 202). Note that a unique IP address is associated with the URL, as is conventional, and it is that IP address which is returned to the user 11, regardless of where in the network the user is located. However, this IP address is applicable to all the individual content caches 13, 23.

In an alternative arrangement, the end user's configured DNS content server 5 returns an alternative DNS name shared by all the content caches/streamers (e.g. cdn.company.co.qq). The end user application 11 then requests the IP address associated with this shared DNS name. The DNS server 5 is configured with a list of IP addresses associated with the DNS name in the request. One of these is returned to the End User, the one selected being chosen based on any number of mechanisms and factors such as for load balancing purposes. The list of IP addresses could consist of only a single IP address, e.g. the IP address shared by all the content caches/streamers (i.e. W.X.Y.Z).

Having received the IP address (step 202) the user's browser 11 then transmits a request (203), addressed to the IP address "W.X.Y.Z". This request is routed to the nearest access server 10, which uses standard routing/policy mechanisms to direct end user traffic addressed to that IP address to the content cache 13 associated with that access server 10 (step 204). It can do this without having to take into account the address or geographic location of the end user 11, because each access server 10 operates exclusively in a geographic sub-domain, and so the subdomain 1 to which any end user 11, 12 is connected is necessarily identified as the one associated with the access server 10. Each access server 10 (20, 30) recognises the IP address W.X.Y.Z as relating uniquely to its respective associated content cache 13, (23, 23) which, because of the architecture of the network, is necessarily the closest to any user terminal 11, (21, 31) transmitting a data request to that access server. Thus each access server can be configured in the same way, and no address translation or mapping is required to route requests to the correct local content server.

If the content cache 13 connected to the End User's access server 10 cannot itself deliver the required content to the End User 11, either because it does not hold the data or because it is overloaded with similar requests, it may send a redirect to the browser 11 to cause it to retrieve the content from a different content server 23, which may or may not be co-located with the original content/cache. The content server to which the End User is redirected may have an address S.T.U.V, different from the shared content caching IP address (W.X.Y.Z).

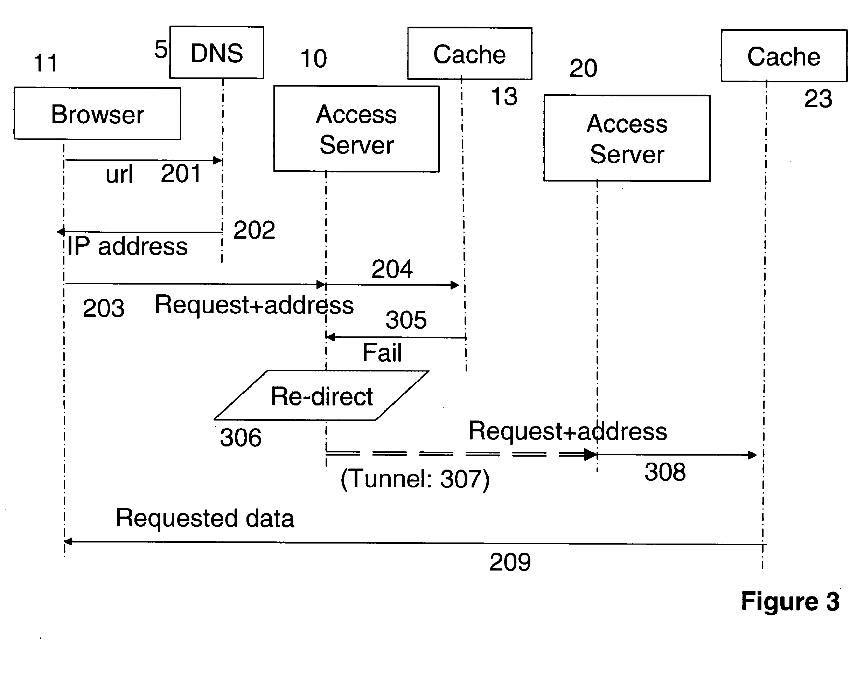

As shown in Figure 1, an access server 10 may be connected to more than one content cache 13, 23, either directly or via another device such as another access server 20 which in turn is connected to a content cache 23. This allows the system to remain operable in the event of failure of a first content cache 13 or of the connection between the access node 10 and the first content cache 13. Operation of the system in such an event is depicted in Figure 3.

If the access server 10 is unable to connect to the associated content server 13, it is configured to forward traffic to the second content cache 23. It is not possible for the first access server 10 to redirect requests by simple routing because all the content caches 23, 43 have the same IP address W.X.Y.Z, and so the forwarded request would simply be returned to the local content cache 13. Instead, in the event of a failure (305) to transmit the request to the local cache 13, the request is forwarded by "tunnelling" the request to the second access server 20. This could be done by generating a packet (step 306), for transmission to the second access server 20, including the original request and the cache address W.X.Y.Z, to the network IP address of the second access server 20. Thus the forwarding address applied by the first access server 10 is that of the second access server 20. This request is therefore transmitted to the second access server 20 (step 307). On receiving the forwarded data request, the second access server 20 extracts the data request and identifies the address of the request as "W.X.Y.Z". The second access server 20 recognises this address as being that of its own associated content server 23, rather than the content server 13 associated with the first access server 10, and forwards the request accordingly (step 308). The content can then be returned to the address of the requesting user (step 309).

## Claims

1. A content distribution network comprising a plurality of content servers, each content server being accessible using the same internet protocol address and arranged to receive requests for content from access servers arranged to route traffic to and from end users on a network, configured such that each access server directs data packets addressed to the IP address common to the content servers, to the content server having the nearest IP routeable point to the source of the request for content, and the content servers are configured to provide said requested content to the source requesting said content.

2. A content distribution network according to claim 1 in which the network is divided into a plurality of network subdomains each of which is associated with a corresponding access server and content server.

3. A content distribution network according to claim 2, in which each at least one of the content servers serves two or more subdomains.

4. A content distribution network according to any preceding claim, configured such that in the event of a content delivery failure condition being detected, traffic passing through one access server can be redirected to another access server in said content distribution system.

5. A content distribution network according to claim 4, comprising routing apparatus arranged to implement said redirection when said failure condition is detected.

6. A method of operating a content distribution network comprising a plurality of content servers each being accessible using the same internet protocol address and a plurality of access servers arranged to route traffic to and from end users on a network, wherein each access server, on receiving a data packet addressed to the IP address common to the content servers, identifies the content server having the nearest IP routeable point to the source of the request for content, and routes the data packet to the content server so identified for fulfilment of the request by the content server.

7. A method according to claim 6 in which the network is divided into a plurality of network subdomains each of which is associated with a corresponding access server and content server, and each access server routes all content requests that it receives to the corresponding content server.

8. A method according to claim 7, in which each at least one of the content servers serves two or more subdomains.

9. A method according to claim 6, 7, or 8, wherein in the event of a content delivery failure condition being detected by a first access server attempting to access content from an associated first content server, it causes content to be accessed from a second content server associated with a second access server.

10. A method according to claim 9, in which the first access server redirects traffic by way of a tunnel to the second access server.
